# FASCICULE DE BREVET EUROPEEN

(11) **EP 1 963 942 B1**
(45) Date de publication et mention de la délivrance du brevet: **24.02.2010**
(21) Numéro de dépôt: 06819896.9
(22) Date de dépôt: 01.12.2006
(51) Int. Cl.: G05D 1/06, G01S 3/82

(54) **SYSTEME D'ATTERRISSAGE AUTONOME ET AUTOMATIQUE POUR DRONES**
AUTONOMES UND AUTOMATISCHES LANDESYSTEM FÜR DROHNEN
AUTONOMOUS AND AUTOMATIC LANDING SYSTEM FOR DRONES

(30) Priorité: 02.12.2005 FR 0512257
(43) Date de publication de la demande: 03.09.2008
(73) Titulaire: THALES, 92200 Neuilly sur Seine (FR)
(72) Inventeur: GARREC, Patrick, F-33700 Merignac (FR); CORNIC, Pascal, F-29290 Saint Renan (FR)
(74) Mandataire: Lucas, Laurent Jacques
(86) Numéro de dépôt international: PCT/EP2006/069198
(87) Numéro de publication internationale: WO 2007/063126

(56) Documents cités:
- DE-A1- 19 620 682
- FR-A- 2 638 544

## Description

### DOMAINE DE L'INVENTION

La présente invention concerne le domaine des aéronefs et en particulier le domaine des aéronefs autonomes et automatiques tels que les drones. Elle concerne plus particulièrement le guidage de ces aéronefs en phase d'approche et d'atterrissage.

### CONTEXTE DE L'INVENTION - ART ANTERIEUR

Les systèmes d'aide à l'atterrissage existants, permettant l'atterrissage d'engins autonomes, sont actuellement basés sur des technologies diverses.

On peut en premier lieu recourir à des systèmes homologués par l'aviation civile tels que les systèmes ILS (Instrument Landing System) où MLS (Microwave Landing System), et leurs équivalents militaires tel que les radars de type PAR. Ces systèmes sont peu susceptibles d'être déployés rapidement sur un site d'atterrissage car ils demandent la mise en place d'infrastructures relativement importantes au sol. Ils sont donc peu adaptés à la mise en oeuvre et à la récupération de drones.

Un autre moyen de guider l'atterrissage d'un aéronef consiste à utiliser des systèmes à base de moyens GPS (ou Differential GPS) qui offrent l'avantage d'être d'une mise en oeuvre peu coûteuse. En revanche, Cette solution pose le problème de la disponibilité ou de la continuité de service GPS en mode haute précision. En outre, la vulnérabilité des systèmes GPS en présence de brouilleurs est bien connue,

Un autre moyen consiste à utiliser des systèmes de télémétrie et de guidage à base de laser qui présentent l'avantage de ne pas nécessiter une logistique de mise en oeuvre importante, mais dont l'emploi présente l'inconvénient d'être dépendant des conditions météorologiques et dont la mise en oeuvre nécessite le passage par une phase de recherche (de "scanning") de l'objet à guider, du fait de l'étroitesse du pinceau émis. De plus un équipement complémentaire de positionnement en absolu par rapport à la piste est nécessaire.

Un autre moyen encore proche dans son principe du moyen précédent, consiste à utiliser un système de type radar de poursuite ou de trajectographie, très directif, fonctionnant par exemple en bande millimétrique. Ce type de système est cependant sophistiqué et donc coûteux. D'autre part comme les systèmes de télémétrie laser ils nécessitent eux aussi une phase de recherche pour la désignation d'objectifs et un positionnement absolu par rapport à la piste. Ils sont par ailleurs sensibles tant aux conditions climatiques qu'à la conformation du terrain qui constitue la zone d'approche du terrain sur lequel doit se poser l'objet guidé. En particulier, dans le cas où l'on souhaite procéder au guidage de plusieurs aéronefs, il faut effectuer un partage du temps et opérer des ralliements de cible à cible au risque de perdre une cible et de devoir faire une acquisition complète du contexte. En phase d'approche enfin, les contraintes de guidage pour garder la cible dans le faisceau radar sont très importantes.

Ces deux derniers moyens étant les plus faciles à déployer sur un terrain d'atterrissage non équipé, ils constituent les systèmes de guidage les plus couramment mis en oeuvre. Cependant, s'agissant de systèmes d'émission à pinceaux étroits opérant par pointage de la cible depuis le sol, leur mise en oeuvre passe par une phase de recherche et par un accrochage dynamique sur la cible. Les risques de décrochage et donc d'interruption du guidage sont importants. Lorsque la liaison est critique, une interruption de la poursuite peu engendrer un guindage erratique aux conséquences parfois fatales pour l'aéronef. En outre, ces solutions sont généralement coûteuses et comportent des limitations concernant en particulier l'asservissement du faisceau émis sur la position de la cible en mouvement d'approche, limitations mécaniques qui trouvent leur origine dans les servocommandes. D'autre part, s'agissant de systèmes de détection asservis sur une cible particulière, ces systèmes sont peu adaptés au guidage simultané de plusieurs drones en approche d'une zone d'atterrissage.

Le document de brevet publié sous la référence DE 196 20 682 A1, décrit un dispositif transpondeur permettant d'effectuer une calibration des mesures effectuées par un dispositif électromagnétique de détection, système un radar de type SAR, embarqué sur un aéronef, le transpondeur étant disposé au sol et retransmettant vers le radar un signal caractéristique déduit du signal émis. Selon ce document le signal transmis par le transpondeur permet au radar SAR embarqué d'améliorer la précision des mesures effectuées.

### PRESENTATION DE L'INVENTION

Un but de l'invention consiste à proposer une solution alternative aux dispositifs existants. A cet effet, l'invention a pour objet un système de guidage pour l'atterrissage automatique d'aéronefs caractérisé en ce qu'il comporte au moins :
- un dispositif électromagnétique de détection et de localisation, positionné au sol pour mesurer, pour au moins un aéronef, la distance le séparant de l'aéronef et la position angulaire dudit aéronef par rapport à une direction de référence, à partir de l'écho réfléchi par ledit aéronef,
- une première balise radioélectrique multifonction embarquée sur chaque aéronef guidé, la balise comportant des moyens pour échanger des informations avec le dispositif de détection et pour former une source ponctuelle émettant vers le dispositif de détection une onde sinusoïdale continue,
le dispositif de détection et de localisation exploitant l'onde continue émise par la balise pour effectuer une localisation passive destinée à améliorer la précision de la mesure de la position angulaire de l'aéronef et comportant des moyens pour élaborer et transmettre périodiquement à l'aéronef par l'intermédiaire de la balise des informations permettant au dit aéronef de rallier depuis sa position une trajectoire d'atterrissage optimale.

Selon une forme de réalisation préférée, le système selon l'invention comporte en outre une deuxième balise radioélectrique placée au sol au niveau du point de contact de l'aéronef avec le sol pour permettre au dispositif de détection et de localisation d'effectuer des mesures différentielles de la distance et de la position angulaire de l'aéronef. La balise au sol comporte des moyens passifs permettant au dispositif de détection et de localisation de différentier l'écho réfléchi par cette balise d'un écho fixe.

Selon une variante de réalisation préférée, ces moyens passifs sont constitués par les pales d'un ventilateur en mouvement.

Selon une autre forme de réalisation du système selon l'invention, la première balise multifonction, embarquée à bord de l'aéronef, comporte également des moyens pour réaliser des mesures d'altitude, ladite balise remplissant la fonction de radio altimètre, la balise transmettant de manière périodique au dispositif de détection et de localisation des informations relatives à l'altitude de l'aéronef, altitude mesurée par ladite balise, le dispositif de détection et de localisation exploitant les informations d'altitude transmises par la balise pour améliorer la précision de la mesure de la position angulaire de l'aéronef.

Selon un mode particulier de mise en oeuvre de l'invention, le fonctionnement du dispositif de détection et de localisation alterne des périodes de localisation active, de durée ΔT1, durant lesquelles il mesure la distance et la position angulaire de l'aéronef à partir de l'écho réfléchi par ledit aéronef et des périodes d'écoute et d'échange de données, de durée ΔT2, durant lesquelles il mesure la position angulaire de l'aéronef à partir du signal émis par la balise, et durant lesquels il transmet des informations de positionnement à l'aéronef.

Selon un autre mode particulier de mise en oeuvre de l'invention, le dispositif de détection et de localisation exploite les signaux reçus au cours des N périodes de localisation active formant un même groupe pour réaliser un filtrage doppler du signal, le signal filtré étant utilisé pour effectuer la mesure de la distance et de la position angulaire de l'aéronef, cette mesure étant exploitée conjointement avec la mesure de position angulaire obtenue à partir du signal émis par la balise, lors de la période d'écoute et d'échange de données qui précède ledit groupe, et avec la mesure d'altitude transmise par la balise durant cette même période.

Selon une autre forme de réalisation de l'invention, le système comporte une troisième balise radioélectrique multifonction, identique à la première balise et embarquée avec la première balise sur chaque aéronef guidé, et des moyens permettant d'utiliser alternativement chaque balise pour effectuer les tâche d'échange d'informations avec le dispositif de détection et de localisation, ainsi que la tâche de réalisation d'une source d'émission ponctuelle, pendant que l'autre balise effectue les mesures d'altitude.

Dans un mode particulier de mise en oeuvre de cette forme de réalisation, le fonctionnement du dispositif de détection et de localisation alterne des groupes de N périodes de localisation active, de durée ΔT1, durant lesquelles il mesure la distance et la position angulaire de l'aéronef à partir de l'écho réfléchi par ledit aéronef, et des périodes d'écoute et d'échange de données, de durée ΔT2, durant lesquelles il mesure la position angulaire de l'aéronef à partir du signal émis par une des balises radioélectriques multifonctions. Durant ces périodes de durée ΔT₂ il transmet également des informations de positionnement à l'aéronef par l'intermédiaire de ladite balise. Chaque groupe de périodes de localisation active est alors séparé du groupe suivant par une période d'écoute et d'échange de données. La tache d'échange d'informations avec le dispositif de détection et de localisation, ainsi que la tâche de réalisation d'une source d'émission ponctuelle, est réalisées alternativement, d'une période d'écoute et d'échange de données à l'autre, par la première et par la deuxième balise.
Le dispositif proposé présente avantageusement une plus grande robustesse vis à vis des conditions géographiques et climatiques que les dispositifs existants. Il présente également l'avantage d'être de conception plus simple et donc moins, coûteuse. Il dispose en outre avantageusement la capacité de guider simultanément plusieurs aéronef vers la zone d'atterrissage.

### DESCRIPTION DES FIGURES

Les caractéristiques et avantages de l'invention apparaîtront clairement dans la description qui suit, description illustrée par les figures annexées qui représentent:
- la figure 1, l'illustration du principe de fonctionnement d'un système selon l'invention de guidage automatique d'aéronefs en phase d'approche et d'atterrissage,
- la figure 2, une illustration schématique du principe de détermination de la distance et de l'élévation d'un aéronef en approche,
- la figure 3, une illustration schématique du principe de détermination de la direction d'approche d'un aéronef,
- la figure 4, un premier exemple de chronogramme type de cadencement des différentes tâches remplies par le système selon l'invention. les la figure 1,
- la figure 5, un deuxième exemple de chronogramme type de cadencement des différentes tâches remplies par le système selon l'invention.

### DESCRIPTION DETAILLEE

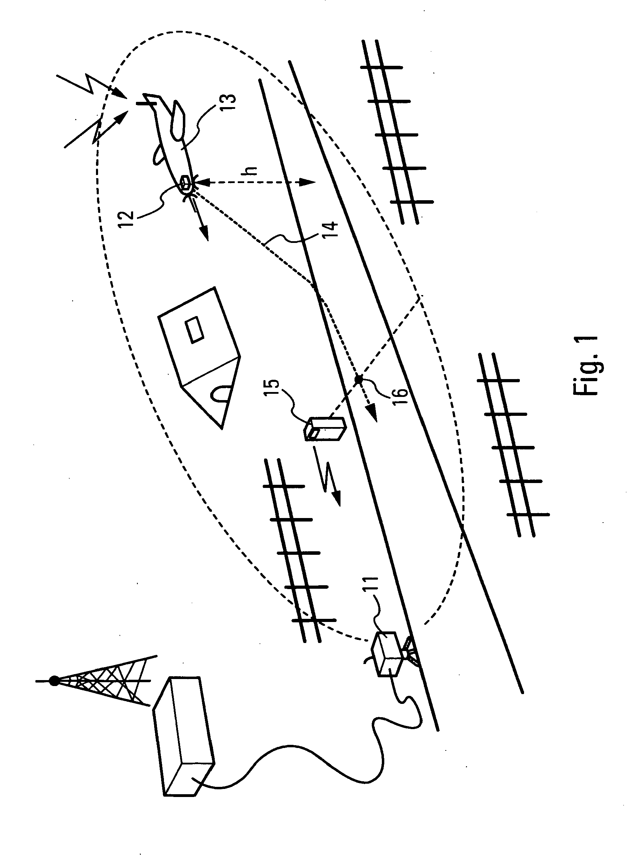

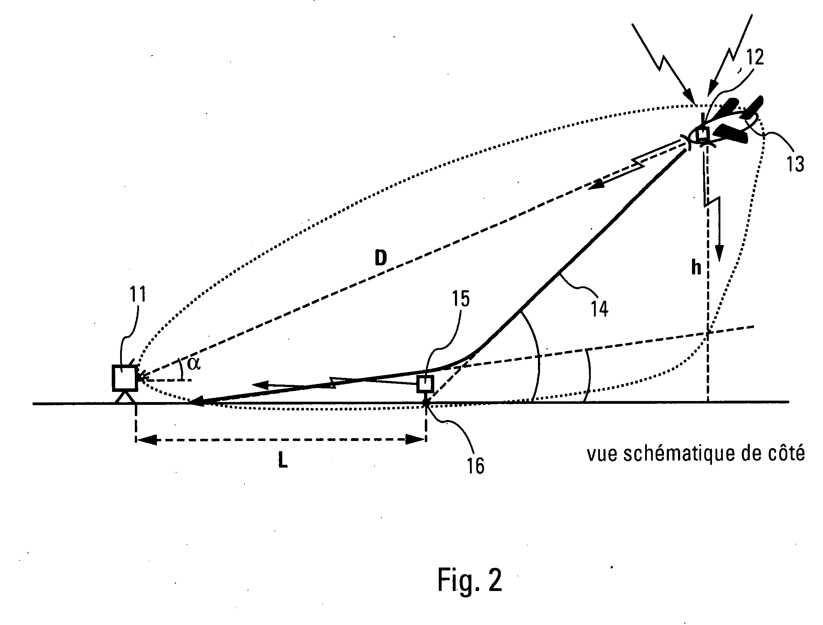

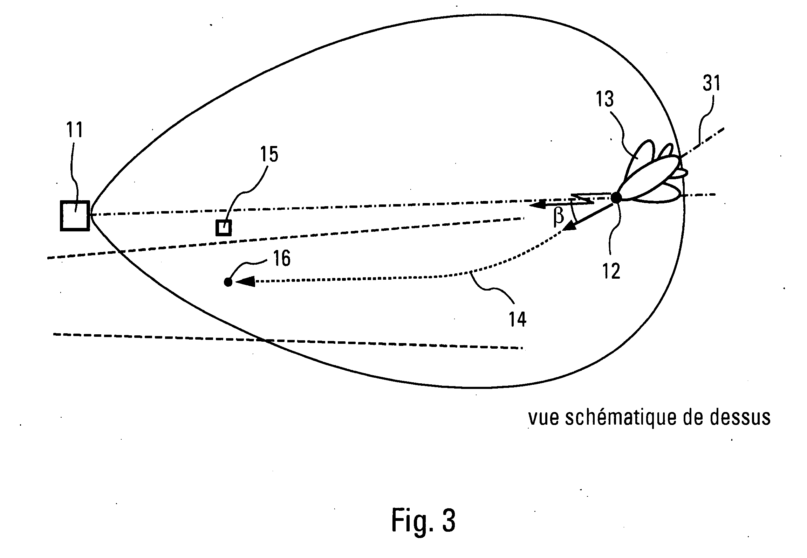

On s'intéresse tout d'abord aux figures 1 à 3 qui illustre, au moyen de vues sous différents angles, le principe de fonctionnement du système selon l'invention.

Pour procéder au guidage automatique d'un aéronef en phase d'atterrissage, le système selon l'invention comporte principalement un dispositif de détection et de localisation 11, situé au sol, et une balise multifonctions 12 embarqué à bord de l'aéronef 13.
Le dispositif de détection 11 a pour principale fonction de mesurer de manière périodique l'altitude h de l'aéronef 13 ainsi que la distance radiale D qui sépare l'aéronef du point sur lequel il est situé. Il mesure également les écarts de direction et d'altitude existant entre la direction joignant ce dispositif à l'aéronef et une direction de référence, de préférence parallèle à l'axe de la piste sur laquelle l'aéronef est sensé atterrir. Pour ce faire, met en oeuvre par exemple des mesures d'écartométrie angulaire, connue par ailleurs, lui permettant de déterminer l'azimut et l'élévation relatives à l'aéronef guidé. Ce dispositif peut par exemple, dans un mode de réalisation particulier, être constitué de manière relativement simple par un radar d'atterrissage constitué par un radar de veille classique équipé des moyens de réaliser des mesures d'écartométrie angulaire et pointé de manière fixe dans une direction donnée qui correspond globalement à la direction d'approche optimale de la piste d'atterrissage. Selon l'invention ce radar d'atterrissage présentant un diagramme de rayonnement suffisamment large pour intercepter un ou plusieurs aéronefs en approche sans avoir à procéder à une opération de recherche. Dans un mode de réalisation particulier plus sophistiqué, le dispositif de détection 11 peut également consister en un radar équipé d'une antenne active permettant de former plusieurs faisceaux de réception dans des directions choisies. Un tel dispositif peut avantageusement être utilisé en particulier lorsque le fonctionnement du système est potentiellement perturbé par des réflexions multiples des échos radar sur le sol ainsi que sur des éléments de faible hauteur, des bâtiments ou des véhicules par exemple, posés sur le sol.

La position de l'aéronef est déterminée par le radar par mise en oeuvre de calculs de télémétrie et d'écartométrie angulaire, connus par ailleurs et non développées ici. L'intégration au cours du temps des positions successives de l'aéronef permet au radar de déterminer sa trajectoire de ce dernier. Cette trajectoire, est comparée par le calculateur du radar à la trajectoire permettant à l'aéronef de rallier son point d'atterrissage. Le calculateur détermine en particulier à chaque mesure l'écart Δₚ existant entre la position réelle de l'aéronef à l'instant de la mesure et la position où se situerait le même aéronef suivant la trajectoire de ralliement. La trajectoire de ralliement est symbolisée par la courbe en pointillés 14 dont les projections sont représentées sur les figures 1 à 3.

La balise multifonctions 14, embarquée par l'aéronef, remplit à la fois des fonctions autonomes de mesure et des fonctions de balise répondeuse, ainsi que des fonctions de communication. Le radar 11 et la balise 12 forment les éléments de base du système selon l'invention.

En phase stabilisée, lorsqu'un aéronef est pris en charge par le système, le fonctionnement du système radar-balise suit de manière globale le schéma général suivant.
- le radar 11 procède de manière périodique à la localisation de l'aéronef et détermine l'écart entre cette position et la position correspondant à une trajectoire permettant un atterrissage satisfaisant.
- cet écart est utilisé par le calculateur du radar pour élaborer des informations de correction de trajectoire qui sont transmises à la balise 12 de l'aéronef,
- la balise multifonctions 12 reçoit les informations provenant du radar 11. et les communique au calculateur de l'aéronef 13 qui effectue la correction correspondante.

De façon à accroître la précision des mesures de position, effectuées par le radar 11, la balise multifonction 12 assure également la fonction complémentaire de radio altimètre. A cet effet la balise embarquée comporte un émetteur-récepteur ainsi qu'un calculateur destiné notamment au traitement des signaux reçus. La balise 12 comporte également une antenne positionnée sous l'aéronef et dirigée vers le sol. La mesure d'altitude est réalisée, de manière connue, par mesure du temps de parcours d'une onde émise et réfléchie par le sol. Selon l'invention, les résultats de mesures sont transmis au radar qui les utilise le cas échéant pour corriger l'altitude de l'aéronef 13 déterminée à l'aide de l'écho radar. L'information d'altitude fournie par la balise 12 est plus particulièrement utilisée à partir de l'instant où l'aéronef se situe à une distance relativement proche du point d'atterrissage car dans cette phase la précision sur la mesure d'altitude devient importante.
Outre la fonction de balise répondeuse et de radio altimètre, la balise multifonctions 12 joue le rôle d'une source ponctuelle émettant vers l'avant de l'aéronef 13 un signal dont le niveau est sensiblement supérieur au niveau de l'écho de peau réfléchi par l'aéronef 13. A cet effet elle dispose d'une antenne, positionnée à l'avant de l'aéronef le long de la ligne médiane et dirigée vers l'avant. Selon l'invention, le diagramme de rayonnement de cette antenne a la forme d'un pinceau étroit de sorte que le signal ainsi émis est détecté par le radar comme provenant d'une source ponctuelle et peut être utilisé par le radar 11 pour déterminer de manière précise la position angulaire de l'aéronef 13 avec une meilleure précision que celle obtenue à partir de l'écho de peau réfléchi. L'écho de peau peut en effet provenir de diverses parties scintillantes du fuselage de l'aéronef, ces éléments scintillants du fuselage se trouvant placés à une distance plus ou moins grande de l'axe médian 31 de l'aéronef. Ce peut par exemple être les bords des ailes.
Le biais induit par la dispersion des points scintillants sur le fuselage, se traduit en pratique par une erreur sur la mesure de position angulaire (angles α et β) de l'aéronef 13 par le radar 11. Selon l'invention, cette erreur peut avantageusement être corrigée par comparaison de la position angulaire déterminée à partir de l'écho radar et de la position angulaire déterminée à partir du signal émis par la balise 12.
Le signal émis peut avantageusement consister en un simple signal CW à fréquence, f₀ unique, émis en continue sur une fréquence située en dehors de la bande utilisée pour la localisation radar. La balise 16 est alors un dispositif simple émettant en continues un signal à une fréquence

Comme il a été dit précédemment, les mesures des positions successives de l'aéronef au cours du temps, effectuées par le radar 11, permettent à celui-ci d'élaborer des informations de correction destinées à l'aéronef 13. Ces informations sont utilisées par ce dernier pour corriger sa trajectoire de proche en proche, jusqu'à rallier la trajectoire d'atterrissage 14. Les informations, ou ordres, de correction sont transmises à l'aéronef par la voie de communication dont dispose la balise multifonction 12. Cette voie de communication est une voie bidirectionnelle qui permet en outre à l'aéronef 13 de communiquer son altitude au radar 11. Elle permet également à l'aéronef de communiquer avec un centre opérationnel en relation avec le radar et de lui faire parvenir diverses informations, relatives par exemple au données collectées pendant la mission effectuée. Elle permet enfin de transmettre au radar 11 diverses informations relatives à l'identification de l'aéronef 13 et au bon fonctionnement des équipements embarqués à bord.

Dans le but de renforcer la précision de la mesure de distance le système selon l'invention peut également comporter une deuxième balise multifonction 15, fixe, positionnée au sol le long de la piste d'atterrissage en regard du point de contact 16 de l'aéronef avec le sol. Les déterminations successives de la position de l'aéronef 13 par rapport à ce point 14 peuvent ainsi être effectuées de manière différentielle à partir des mesures de la distance de l'aéronef 13 et de la distance de la balise au sol 15 effectuées par le radar 11, et être ainsi exemptes de biais.
Afin de pouvoir différentier l'écho provenant de la balise multifonction additionnelle 15, balise fixe posée au sol, d'un écho fixe pouvant être éliminé par traitement, cette balise comporte avantageusement des moyens lui permettant de rétrodiffuser vers le radar un écho dont la fréquence présente un décalage doppler.

Dans un mode de réalisation préféré, ces moyens consistent en un réflecteur mobile constitué par exemple par un ventilateur en mouvement. Ce mode de réalisation particulier, est particulièrement avantageux car la balise au sol reste un simple dispositif passif au regard de la détection radar. Cependant, toute autre solution permettant de produire un signal synchrone du signal émis par le radar et présentant un décalage doppler, est bien entendu envisageable quoique plus complexe à mettre en oeuvre.

Pour des raisons de commodité, la deuxième balise multifonctions 15 posée au sol et destinée à accroître la précision de la mesure de distance, peut être de même type que la balise multifonctions embarquée à bord de l'aéronef et à ce titre comporter une fonction de communication, fonction qui peut par exemple être mise avantageusement à profit pour transmettre au radar un message relatif à son état de fonctionnement.

Ainsi, selon l'invention, le guidage de l'aéronef 13 est réalisé au moyen de mesures successives de positions effectuées par le radar 11 à partir de l'écho de peau réfléchi par l'aéronef. Ces mesures peuvent avantageusement être affinées par l'exploitation conjointe de mesures effectuées sur le signal ponctuel émis par la balise 12 située à bord de l'aéronef, ainsi que par l'exploitation de la mesure d'altitude réalisée par la balise 12 et transmise au radar au travers des moyens bidirectionnels de communication dont elle dispose.
Par ailleurs, les mesures réalisées à partir de l'écho réfléchi par l'aéronef peuvent également être débarrassées de tout biais en ajoutant au système une deuxième balise 15 posée au sol au niveau du point d'atterrissage, le long de la piste. Cette deuxième balise permet avantageusement au radar de réaliser des mesures de télémétrie et d'écartométrie différentielles sur l'aéronef.

Ce système simple, basé sur l'utilisation d'un radar classique disposant d'un diagramme de rayonnement large présente de nombreux avantages par rapport aux autres systèmes de guidage cités, connus de l'art antérieur. Dans la mesure où son fonctionnement ne nécessite pas un pointage permanent et précis d'un faisceau de guidage sur l'objet à guider, Il permet en particulier de guider plusieurs aéronefs simultanément avec une précision satisfaisante tout en mettant en oeuvre un minimum de moyens.
La balise embarquée à bord de l'aéronef peut, quant à elle, avantageusement remplir d'autres fonctions que la réalisation d'un écho ponctuel. Elle peut par exemple permettre l'identification de l'aéronef 13 sur lequel elle est embarquée. Ainsi, dans le cas où le système selon l'invention est utilisé pour le guidage automatique de plusieurs aéronefs, chaque aéronef peut être identifié par un indicatif propre.

Le système selon l'invention présente également l'avantage d'être facile à installer, même sur une zone d'atterrissage improvisée, d'avoir une portée satisfaisante et d'être peu dépendant des conditions atmosphériques. Il représente donc un moyen globalement très avantageux pour réaliser le guidage de drones et faciliter leur atterrissage sur des terrains improvisés et temporaires, ne disposant pas de moyens d'aide à l'atterrissage automatique plus classique.

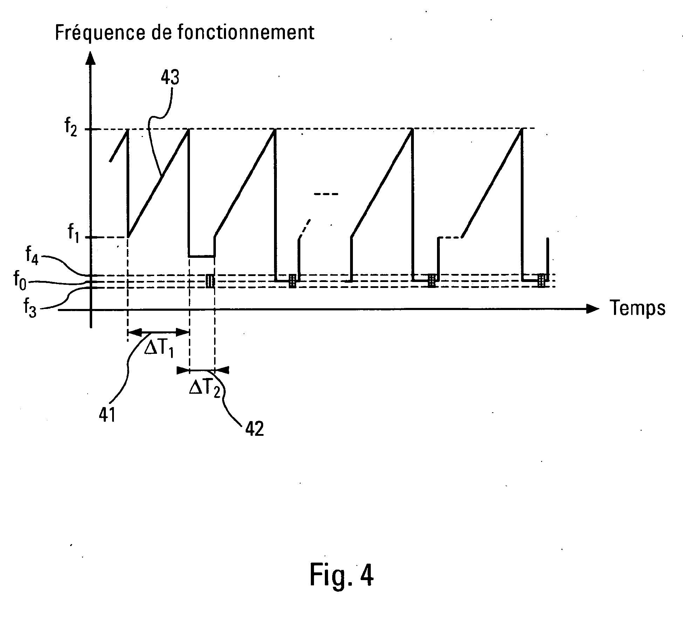

On s'intéresse à présente à la figure 4 qui illustre un premier exemple de séquencement permettant de mettre en oeuvre le système selon l'invention.

Dans l'exemple de la figure 4, le radar 11 constituant le dispositif de détection et de localisation du système est un radar multistatique, comportant une voie d'émission et au moins une voie de réception, la voie d'émission étant indépendante des voies de réception. Cette configuration permet au système d'émettre et de recevoir des signaux de façon simultanée.

Le séquencement illustré par la figure 4 est un séquencement simple comportant une phase unique constituée par l'alternance de deux périodes ou récurrences, une période 41 dédiée exclusivement aux tâches de détection et de localisation exécutées par le radar 11, et une période 42 durant laquelle le radar exécute principalement une tâche d'écoute des signaux émis par la balise embarquée 12. Durant chaque période 41 le radar émet de manière continue une onde dont la fréquence évolue au cours du temps suivant une loi donnée, par exemple une loi linéaire telle que la rampe de fréquence 43 de la figure 4. Le signal émis se présente ainsi comme un signal dont la fréquence varie d'une valeur f₁ à une valeur f₂ pendant l'intervalle de temps ΔT₁. Ce type de forme d'onde bien connu permet au radar de réaliser, en appliquant au signal reçu le filtrage approprié, une mesure fine de la distance de l'aéronef guidé. Le radar 11 étant un radar multistatique l'écoute radar et l'analyse des échos reçus est avantageusement réalisée de façon simultanée de sorte qu'à la fin de la période 41 le fonctionnement en mode radar est achevé.

Durant chaque période 42, le mode de fonctionnement du radar se modifie afin de réaliser une écoute radioélectrique des signaux émis par la balise. Comme il a été dit précédemment, ces signaux sont de deux natures. On distingue en effet le signal de localisation, ou signal balise, destiné à accroître la précision de localisation de l'aéronef par le radar et les signaux portant les informations transmises par l'aéronef 13 au radar 11 à son usage propre ou bien à celui d'un centre opérationnel en liaison avec le radar. Selon un mode de réalisation préféré, mis non exclusif, de l'invention le signal balise est un signal sinusoïdal continu (signal CW) dont la fréquence f₀ est de préférence proche de la bande dans laquelle fonctionne le radar durant la périodes 41 de localisation. De la sorte aucun changement de fréquence de l'oscillateur local du récepteur du radar 11 n'est à effectuer lorsque l'on passe de la période 41 à la période 42.
Dans ce même mode de réalisation préféré, par souci de simplification de la synchronisation des tâches, le signal balise est émis de manière interrompue même durant les périodes 41. cependant il est évidemment possible de limiter cette émission aux périodes 42 à condition toutefois que la balise 12 puisse avoir connaissance d'une façon quelconque des instants de début des périodes 42 ainsi que de leurs durées, notamment si ces durées sont variables au cours du temps.
Ce mode de localisation par écoute est semblable à celui réalisé par certains équipement de détection électromagnétique connus.
Les échanges d'informations pouvant avoir lieu entre le radar et la balise durant une période 42 sont quant à eux matérialisé au moyen de signaux modulés en fréquence selon la loi appropriée, une loi binaire à deux fréquences f₄ et f₃ par exemple comme sur l'illustration de la figure 4. Comme pour le signal balise les fréquences f₃ et f₄ sont de préférence choisies de façon à être proches de la bande dans laquelle fonctionne le radar durant la période 41 de localisation.
On peut noter que la durée ΔT₂ de la période 42 n'est pas nécessairement fixe, la condition nécessaire étant que le radar dispose d'un temps d'écoute du signal à la fréquence f₀ qui soit suffisant pour effectuer la localisation de l'aéronef. Le temps restant peut ensuite être utilisé pour l'échange de données entre le radar 11 et la balise 12 embarquée sur l'aéronef; les données échangées consistant notamment dans l'information d'altitude transmise au radar 11 par l'aéronef 13 et dans les informations transmises par le radar à l'aéronef, relatives au cap et à l'altitude que ce dernier doit rallier pour suivre la bonne trajectoire d'atterrissage.
La durée ΔT₂ peut, en particulier, également varier au cours du temps de façon à faire varier la durée totale ΔT = ΔT₁+ΔT₂ pour permettre au radar de réaliser de manière connue des opérations d'élimination des échos de nièmes traces.

Un mode de fonctionnement, tel que celui illustré par la figure 4 par exemple, possède la caractéristique avantageuse de permettre l'intégration du signal reçu durant les périodes 41 successives. La succession des rampes de fréquence 23, en particulier, permet la mise en oeuvre d'un traitement classique sur les échos réfléchis par les aéronefs, traitement de type analyse doppler, par FFT par exemple, sur les signaux reçus par le radar pendant N périodes 41 successives. Cette analyse doppler permet de sélectionner les échos de peau d'intérêt avant la mise en oeuvre des opérations de télémétrie et d'écartométrie, et d'éviter ainsi des calculs inutiles.

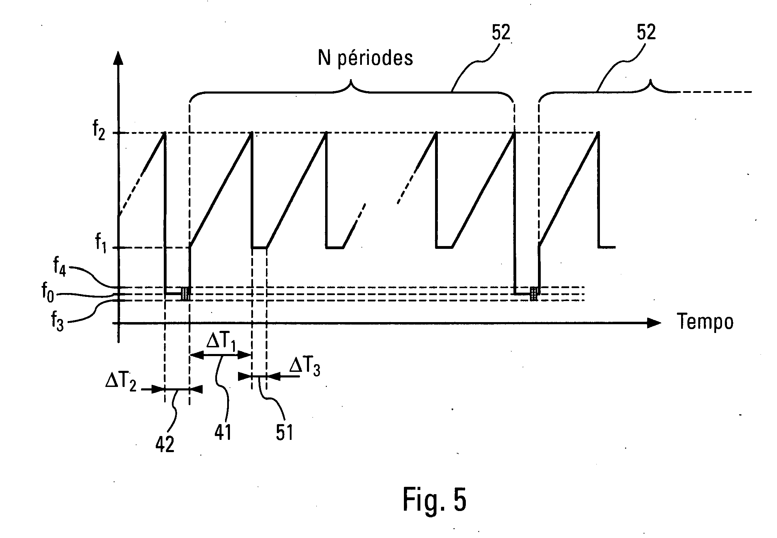

On s'intéresse à présente à la figure 5 qui illustre un deuxième exemple de séquencement permettant de mettre en oeuvre le système selon l'invention. Dans cet exemple, comme dans l'exemple précédent, le séquencement du système selon l'invention comporte des périodes 41 de durée ΔT₁ durant lesquelles le radar effectue des tâches de détection et de localisation des échos réfléchis. De même, comme précédemment, le radar émet durant cette période un signal dont la fréquence suit une loi d'évolution continue entre une fréquence f₁ et une fréquence f₂, une rampe par exemple. De même encore, le séquencement illustré par la figure 5 comporte également des périodes 42 de durée ΔT₂ durant lesquelles le radar 11 procède à une écoute radioélectrique des signaux provenant de la balise 12 embarquée à bord de l'aéronef. En revanche, à la différence de l'exemple précédent, les périodes 41 et 42 ne sont pas alternée mais sont arrangées de façon à ce que chaque période 42 soit séparée de la suivante par N périodes 41, chaque période 41 étant séparées de la suivante par un intervalle de temps 51 dont la durée ΔT₃ prend en compte les temps de propagation des signaux traités et les délais de traitement qui sont notamment fonction de la portée instrumentée par le radar 11. Selon le mode de réalisation choisi, la durée ΔT₃ peut être fixe ou bien peut être variable de façon à permettre au radar de réaliser de manière connue des opérations d'élimination des échos de nièmes traces.
Le séquencement de la figure 5 se présente ainsi comme une succession de groupes 52 de N périodes 41 de durée ΔT₁ chaque groupe étant séparé du suivant par une période d'écoute 42.
Ce type de séquencement est avantageusement bien adapté aux systèmes selon l'invention dont le radar 11 réalise une analyse doppler du signal portant sur les acquisitions de signal réalisées pendant un nombre N de récurrences. En effet, la détection et la localisation ne sont alors effectuée que sur le signal filtré, la localisation obtenue après N période 41 pouvant alors être associé à la localisation réalisée à partir du signal balise durant la période 42 précédente le groupe de N période 41 considéré. Ce séquencement présente ainsi l'avantage de limiter le temps consacré aux périodes d'écoute 42 aux seules périodes d'écoute pouvant être associées à une localisation obtenue après N période 41 de détection et de localisation radar.

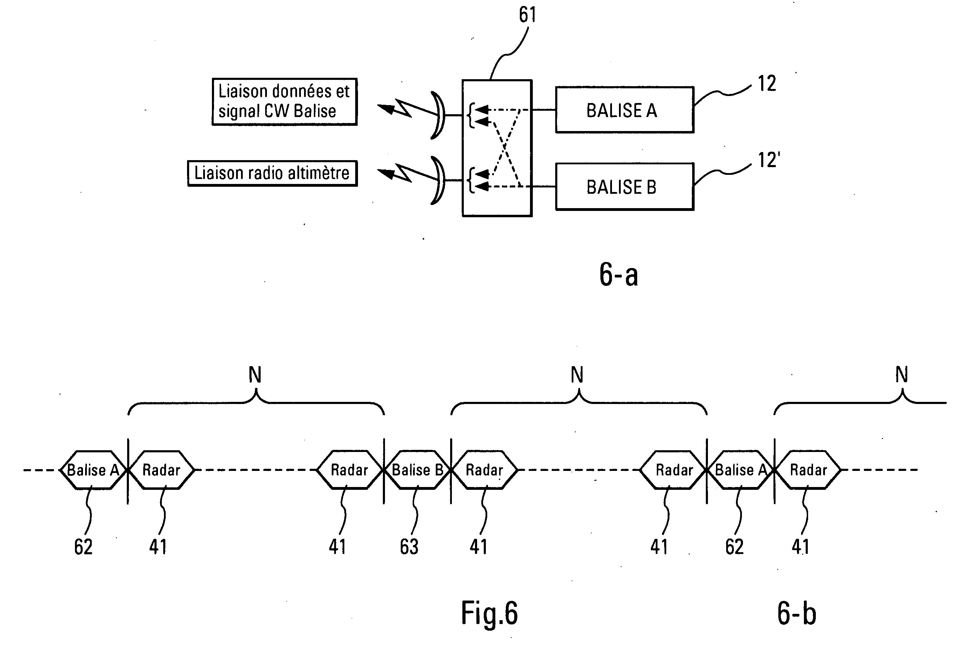

On s'intéresse à présente à la figure 6 qui illustre une variante avantageuse de réalisation du système selon l'invention (figure 6-a) ainsi qu'un exemple de séquencement adapté à cette variante (figure 6-b).
Comme l'illustre la figure 6-a, dans cette variante particulière de réalisation le système selon l'invention comporte une troisième balise multifonctions 12', embarquée à bord de l'aéronef avec la première balise 12. Les deux balises 12 et 12' sont agencées de façon à ce que chacune d'elles remplisse alternativement les fonctions de communication et démission du signal balise puis la fonction de mesure altimétrique, l'autre balise remplissant dans le même temps la fonction de mesure altimétrique puis les fonctions de communication et démission du signal balise. Ainsi chacune des balises est alternativement utilisée pour transmettre le signal balise et échanger des informations avec le radar 11, puis pour effectuer une mesure d'altitude. Pour effectuer la commutation des balises sur l'une ou l'autre antenne le système selon l'invention comporte également dans cette variante des moyens de commutation automatique 61.
L'intérêt de cette variante de réalisation du système selon l'invention peut être mis en évidence au moyen du chronogramme de séquencement de la figure 6-b proposé à titre d'exemple non limitatif. Selon ce chronogramme schématique le séquencement proposé consiste dans une succession de groupes de N périodes 41 durant lesquelles le radar 11 effectue des tâches de localisation sur l'écho de peau de l'aéronef, ces groupes étant séparés alternativement les uns des autres soit par une période 62 soit par une période 63. Durant une période 62, une des deux balises embarquées, la balise 12 par exemple, effectue les opérations d'échange de données avec le radar et assure l'émission du signal balise vers le radar, tandis que la deuxième balise, la balise 12' effectue d'autre tâche, par exemple des mesures d'altimétrie. Inversement, durant une période 63, l'autre balise, la balise 12', effectue à son tour les opérations d'échange de données avec le radar et assure l'émission du signal balise vers le radar, tandis que la première balise effectue d'autres tâches.

Ce mode particulier de réalisation, associé à un séquencement approprié du type de celui illustré par la figure 6-a présente, du fait de la redondance des équipements embarqués à bord de l'aéronef, plusieurs avantages significatifs. Il permet en particulier d'assurer, en cas de panne d'une des deux balises 12 ou 12', un fonctionnement en mode dégradé qui permet cependant au radar et à la balise encore en état de marche d'assurer un guidage satisfaisant de l'aéronef vers son point d'atterrissage. Dans ce mode dégradé, l'ensemble des communications entre le radar et la balise restante est renouvelé, dans le cas le plus défavorable ou une des deux balises n'assure plus aucune fonction, avec un intervalle de temps double de l'intervalle normal, toutes les périodes 61 par exemple si la balise 12' est en panne, intervalle de temps qui peut cependant être déterminé dans le séquencement de façon à ce qu'un guidage satisfaisant de l'aéronef reste possible. Dans cette variante de réalisation le système selon l'invention apporte donc avantageusement un accroissement de fiabilité à l'ensemble de l'opération.

Dans le but de faciliter l'exposé, le système d'atterrissage automatique selon l'invention a été décrit dans le texte qui précède, pour une configuration mettant en jeu un seul aéronef. Cette configuration n'est bien entendu pas limitative et le système selon l'invention est bien entendu applicable à des configurations plus complexes dans lesquelles il convient de guider et de faire atterrir plusieurs aéronefs. Dans une telle configuration le système selon l'invention comporte alors au moins un dispositif de détection et de localisation, par exemple un radar 11, situé au sol, associé ou non à une balise au sol 14, et une pluralité de balises multifonctions embarquées à bord des aéronefs dont le système assure l'atterrissage. Chacun des aéronefs emporte ainsi, selon le mode de réalisation considéré, une balise12 ou un groupe de deux balises 12 et 12'.

## Revendications

1. Système de guidage pour l'atterrissage automatique d'aéronefs comportant au moins :
- un dispositif électromagnétique de détection et de localisation, positionné au sol pour mesurer, pour au moins un aéronef, à partir de l'écho réfléchi par ledit aéronef, la distance le séparant de l'aéronef et la position angulaire dudit aéronef par rapport à une direction de référence,
- une première balise radioélectrique multifonction embarquée sur chaque aéronef guidé,
la balise et le dispositif électromagnétique de détection comportant des moyens pour échanger des informations, **caractérisé en ce que** la balise comportant des moyens pour former une source ponctuelle émettant vers le dispositif de détection une onde sinusoïdale continue, le dispositif de détection et de localisation exploite l'onde continue émise par la balise pour effectuer une localisation passive et l'associe à l'écho réfléchi par l'aéronef pour améliorer la précision de la mesure de la position angulaire de l'aéronef et élabore et transmet périodiquement à l'aéronef, par l'intermédiaire de la balise, des informations permettant au dit aéronef de rallier depuis sa position une trajectoire d'atterrissage optimale.

2. Système selon la revendication 1, comportant en outre une deuxième balise radioélectrique placée au sol au niveau du point de contact de l'aéronef avec le sol pour permettre au dispositif de détection et de localisation d'effectuer des mesures différentielles de la distance et de la position angulaire de l'aéronef.

3. Système selon la revendication 2, dans lequel la deuxième balise comporte des moyens passifs permettant au dispositif de détection et de localisation de différentier l'écho réfléchi par cette balise d'un écho fixe.

4. Système selon la revendication 3 dans lequel lesdits moyens passifs sont constitués par les pales d'un ventilateur en mouvement.

5. Système selon l'une des revendications 1 ou 2, dans lequel la balise multifonction embarquée comporte des moyens pour réaliser des mesures d'altitude, ladite balise remplissant la fonction de radio altimètre.

6. Système selon la revendication 3, dans lequel la balise transmet de manière périodique au dispositif de détection et de localisation des informations relatives à l'altitude de l'aéronef, altitude mesurée par ladite balise.

7. Système selon la revendication 4, dans lequel le dispositif de détection et de localisation exploite les informations d'altitude transmises par la balise pour améliorer la précision de la mesure de la position angulaire de l'aéronef.

8. Système selon l'une quelconque des revendications précédentes, dans lequel le fonctionnement du dispositif de détection et de localisation alterne des périodes de localisation active, de durée ΔT1, durant lesquelles il mesure la distance et la position angulaire de l'aéronef à partir de l'écho réfléchi par ledit aéronef et des périodes d'écoute et d'échange de données, de durée ΔT2, durant lesquelles il mesure la position angulaire de l'aéronef à partir du signal émis par la balise, et durant lesquels il transmet des informations de positionnement à l'aéronef.

9. Système selon l'une quelconque des revendications 1 à 5, dans lequel le fonctionnement du dispositif de détection et de localisation alterne des groupes de N périodes de localisation active, de durée ΔT1, durant lesquelles il mesure la distance et la position angulaire de l'aéronef à partir de l'écho réfléchi par ledit aéronef et des périodes d'écoute et d'échange de données, de durée ΔT2, durant lesquelles il mesure la position angulaire de l'aéronef à partir du signal émis par la balise, et durant lesquels il transmet des informations de positionnement à l'aéronef, chaque groupe de périodes de localisation active étant séparé du groupe suivant par une période d'écoute et d'échange de données.

10. Système selon la revendication 7, dans lequel le dispositif de détection et de localisation exploite les signaux reçus au cours des N périodes de localisation active formant un même groupe pour réaliser un filtrage doppler du signal, le signal filtré étant utilisé pour effectuer la mesure de la distance et de la position angulaire de l'aéronef, cette mesure étant exploitée conjointement avec la mesure de position angulaire obtenue à partir du signal émis par la balise, lors de la période d'écoute et d'échange de données qui précède ledit groupe, et avec la mesure d'altitude transmise par la balise durant cette même période.

11. Système selon l'une quelconque des revendications 1 à 5, comportant une troisième balise radioélectrique multifonction, identique à la première balise et embarquée avec la première balise sur chaque aéronef guidé, et des moyens permettant d'utiliser alternativement chaque balise pour effectuer les tâche d'échange d'informations avec le dispositif de détection et de localisation, ainsi que la tâche de réalisation d'une source d'émission ponctuelle, pendant que l'autre balise effectue les mesures d'altitude.

12. Système selon la revendication 9, dans lequel le fonctionnement du dispositif de détection et de localisation alterne des groupes de N périodes de localisation active, de durée ΔT1, durant lesquelles il mesure la distance et la position angulaire de l'aéronef à partir de l'écho réfléchi par ledit aéronef, et des périodes d'écoute et d'échange de données, de durée ΔT2, durant lesquelles il mesure la position angulaire de l'aéronef à partir du signal émis par une des balises radioélectriques multifonctions, et durant lesquels il transmet des informations de positionnement à l'aéronef par l'intermédiaire de ladite balise; chaque groupe de périodes de localisation active étant séparé du groupe suivant par une période d'écoute et d'échange de données, la tache d'échange d'informations avec le dispositif de détection et de localisation, ainsi que la tâche de réalisation d'une source d'émission ponctuelle, étant réalisée alternativement, d'une période d'écoute et d'échange de données à l'autre, par la première et par la deuxième balise.

13. Système selon l'une quelconque des revendications précédentes, dans lequel le dispositif de détection et de localisation est un radar comportant des moyens pour effectuer des mesures de distance et de localisation angulaire.

14. Système selon la revendication 11, dans lequel le radar utilisé est un radar à formation de faisceaux.

## Claims

1. A guidance system for the automatic landing of aircrafts comprising at least:
- an electromagnetic detection and localisation device, positioned on the ground for measuring, for at least one aircraft, the distance between it and said aircraft and the angular position of said aircraft in relation to a reference direction, using the echo reflected by said aircraft,
- a first multi-function radioelectric beacon on board each guided aircraft,
the beacon and the electromagnetic detection device comprising means for exchanging information, **characterised in that** the beacon comprising means for forming a point source emitting a continuous sinusoidal wave to the detection device, the detection and localisation device using the continuous wave emitted by the beacon to perform passive localisation and associating it with the echo reflected by the aircraft, in order to improve the accuracy of the angular position measurement of the aircraft and periodically generating and transmitting to the aircraft, by means of the beacon, information allowing said aircraft to find an optimal landing trajectory from its position.

2. System according to claim 1, further comprising a second radioelectric beacon positioned on the ground at the point of contact of the aircraft with the ground to allow the detection and localisation device to perform differential measurements of the distance and of the angular position of the aircraft.

3. System according to claim 2, wherein the second beacon comprises passive means allowing the detection and localisation system to differentiate the echo reflected by this beacon from a fixed echo.

4. System according to claim 3, wherein said passive means is formed by the moving vanes of a fan.

5. System according to any one of claims 1 or 2, wherein the on board multi-function beacon comprises means for realising altitude measurements, said beacon fulfilling a radio altimeter function.

6. System according to claim 3, wherein the beacon periodically transmits information relative to the altitude of the aircraft, as measured by said beacon, to the detection and localisation system.

7. System according to claim 4, wherein the detection and localisation device uses the altitude information transmitted by the beacon to improve the accuracy of the angular position measurement of the aircraft.

8. System according to any one of the previous claims, wherein the operation of the detection and localisation device alternates between active localisation periods, of duration Owt1, during which it measures the distance and the angular position of the aircraft from the echo reflected by said aircraft, and listening and data exchange periods, of duration ΔT2, during which it measures the angular position of the aircraft from the signal transmitted by the beacon and transmits positioning information to the aircraft.

9. System according to any one of claims 1 to 5, wherein the operation of the detection and localisation device alternates between groups of N active localisation periods, of duration ΔT1, during which it measures the distance and the angular position of the aircraft from the echo reflected by said aircraft, and listening and data exchange periods, of duration ΔT2, during which it measures the angular position of the aircraft from the signal emitted by the beacon and transmits positioning information to the aircraft, each group of active localisation periods being separated from the next group by a listening and data exchange period.

10. System according to claim 7, wherein the detection and localisation device uses the signals received during the N active localisation periods forming the same group in order to perform Doppler filtering of the signal, the filtered signal being used to perform the distance and angular position measurement of the aircraft, said measurement being used together with the angular position measurement obtained from the signal transmitted by the beacon during the listening and data exchange period which precedes the said group and with the altitude measurement transmitted by the beacon during this same period.

11. system according to any one of claims 1 to 5, comprising a third multi-function radioelectric beacon, identical to the first beacon and located with the first beacon on board each guided aircraft, and means allowing each beacon to be used alternately to perform the information exchange tasks with the detection and localisation device, as well as the task of realising a punctual source of emission, whilst the other beacon performs altitude measurements.

12. System according to claim 9, wherein the operation of the detection and localisation device alternates between groups of N active localisation periods, of duration ΔT1, during which it measures the distance and the angular position of the aircraft from the echo reflected by said aircraft, and listening and data exchange periods, of duration ΔT2, during which it measures the angular position of the aircraft from the signal transmitted by one of the multi-function radioelectric beacons, and transmits positioning information to the aircraft by means of said beacon; each group of active localisation periods being separated from the next group by a listening and data exchange period; the information exchange task with the detection and localisation device, as well as the task of realising a punctual source of emission, being realised alternately, from one listening and data exchange period to another, by the first and the second beacon.

13. System according to any one of the previous claims, wherein the detection and localisation device is a radar comprising means for performing distance and angular localisation measurements.

14. System according to claim 11, wherein the radar is a beamforming radar.

## Patentansprüche

1. Leitsystem zum automatischen Landen von Flugzeugen, das wenigstens Folgendes umfasst:
- ein elektromagnetisches Erkennungs- und Ortungsgerät, das am Boden positioniert ist, um für wenigstens ein Flugzeug die Entfernung zwischen dem Gerät und dem Flugzeug und die Winkellage des Flugzeugs in Bezug auf eine Bezugsrichtung von dem durch das Flugzeug reflektierten Echo aus zu messen,
- eine erste multifunktionelle radioelektrische Bake an Bord jedes geleiteten Flugzeugs,
wobei die Bake und das elektromagnetische Erkennungsgerät Mittel zum Austauschen von Informationen umfassen, **dadurch gekennzeichnet, dass** die Bake Mittel zum Bilden einer Punktquelle umfasst, die eine sinusförmige kontinuierliche Welle zu dem Erkennungsgerät sendet, wobei das Erkennungs- und Ortungsgerät die von der Bake ausgesendete kontinuierliche Welle zum Ausführen einer passiven Ortung benutzt und sie mit dem vom Flugzeug reflektierten Echo assoziiert, um die Genauigkeit der Messung der Winkellage des Flugzeugs zu verbessern, und periodisch Informationen erzeugt und mittels der Bake zum Flugzeug sendet, die es dem Flugzeug ermöglichen, von seiner Position aus eine optimale Landeflugbahn zu erreichen.

2. System nach Anspruch 1, das ferner eine zweite radioelektrische Bake umfasst, die am Boden an der Aufsetzstelle des Flugzeugs auf dem Boden positioniert ist, um es dem Erkennungs- und Ortungsgreät zu gestatten, differentiale Messungen von Entfernung und Winkellage des Flugzeugs auszuführen.

3. System nach Anspruch 2, wobei die zweite Bake passive Mittel umfasst, die es dem Erkennungs- und Ortungssystem gestatten, das von dieser Bake reflektierte Echo von einem festen Echo zu unterscheiden.

4. System nach Anspruch 3, wobei die passiven Mittel von den Flügeln eines Ventilators die sich bewegenden gebildet werden.

5. System nach Anspruch 1 oder 2, wobei die multifunktionelle Bordbake Mittel zum Durchführen von Höhenmessungen umfasst, wobei die Bake eine Höhenmessfunktion per Funk ausführt.

6. System nach Anspruch 3, wobei die Bake periodisch Informationen in Bezug auf die Höhe des Flugzeugs, von der Bake gemessen, zu dem Erkennungs- und Ortungssystem sendet.

7. System nach Anspruch 4, wobei das Erkennungs- und Ortungsgerät die von der Bake gesendeten Höheninformationen zum Verbessern der Genauigkeit der Messung der Winkellage des Flugzeugs benutzt.

8. System nach einem der vorherigen Ansprüche, wobei der Betrieb des Erkennungs- und Ortungsgerätes zwischen aktiven Ortungsperioden mit der Dauer ΔT1, während der es die Entfernung und die Winkellage des Flugzeugs von dem durch das Flugzeug reflektierten Echo aus misst, und Horch- und Datenaustauschperioden mit der Dauer ΔT2 abwechselt, während der es die Winkellage des Flugzeugs von dem durch die Bake ausgesendeten Signal aus misst und Positionierungsinformationen zu dem Flugzeug sendet.

9. System nach einem der Ansprüche 1 bis 5, wobei der Betrieb des Erkennungs- und Ortungsgerätes zwischen Gruppen von N aktiven Ortungsperioden mit der Dauer ΔT1, während der es die Entfernung und die Winkellage des Flugzeugs von dem durch das Flugzeug reflektierten Echo aus misst, und Horch- und Datenaustauschperioden mit der Dauer ΔT2 abwechselt, während der es die Winkellage des Flugzeugs von dem durch die Bake ausgesendeten Signal aus misst und während der es Positionierungsinformationen zu dem Flugzeug sendet, wobei jede Gruppe von aktiven Ortungsperioden von der nächsten Gruppe durch eine Horch- und Datenaustauschperiode getrennt ist.

10. System nach Anspruch 7, wobei das Erkennungs- und Ortungsgerät die während der N aktiven Ortungsperioden, die dieselbe Gruppe bilden, empfangenen Signale benutzt, um eine Doppler-Filterung des Signal aus auszuführen, wobei das gefilterte Signal zum Ausführen der Messung von Entfernung und Winkellage des Flugzeugs benutzt wird, wobei diese Messung zusammen mit der Winkellagenmessung, die von dem Signal erhalten wurde, das von der Bake während der Horch- und Datenaustauschperiode ausgesendet wurde, die der Gruppe vorausgeht, und mit der Höhenmessung benutzt wird, die von der Bake während derselben Periode gesendet wurde.

11. System nach einem der Ansprüche 1 bis 5, das eine dritte multifunktionelle radioelektrische Bake, die mit der ersten Bake identisch ist und sich mit der ersten Bake an Bord jedes geleiteten Flugzeugs befindet, und Mittel umfasst, die es ermöglichen, jede Bake abwechselnd zum Ausführen der Informationsaustauschperioden mit dem Erkennungs- und Ortungsgerät sowie der Aufgabe des Ausführens einer Punktquellenemission zu benutzen, während die andere Bake Höhenmessungen durchführt.

12. System nach Anspruch 9, wobei der Betrieb des Erkennungs- und Ortungsgeräts zwischen Gruppen von N aktiven Ortungsperioden mit der Dauer ΔT1, während der es die Entfernung und die Winkellage des Flugzeugs von dem durch das Flugzeug reflektierten Echo aus misst, und Horch- und Datenaustauschperioden mit der Dauer ΔT2 abwechselt, während der es die Winkellage des Flugzeugs von dem durch eine der multifunktionellen radioelektrischen Baken ausgesendeten Signal aus misst und während der es Lageinformationen mittels der Bake zu dem Flugzeug sendet; wobei jede Gruppe von aktiven Ortungsperioden von der nächsten Gruppe durch eine Horch- und Datenaustauschperiode getrennt ist; wobei die Informationsaustauschaufgabe mit dem Erkennungs- und Ortungsgerät sowie die Aufgabe des Ausführens einer Punktquellenemission abwechselnd, von einer Horch- und Datenaustauschperiode zu einer anderen, von der ersten und der zweiten Bake ausgeführt werden.

13. System nach einem der vorherigen Ansprüche, wobei des Erkennungs- und Ortungsgerät ein Radar ist, das Mittel zum Ausführen von Entfernungs- und Winkelortungsmessungen umfasst.

14. System nach Anspruch 11, wobei das Radar ein Strahlenformungsradar ist.
